# EUROPÄISCHE PATENTANMELDUNG

(11) **EP 2 218 579 A1**
(43) Veröffentlichungstag der Anmeldung: **18.08.2010**
(21) Anmeldenummer: 09002025.6
(22) Anmeldetag: 13.02.2009
(51) Int. Cl.: B32B 37/06

(54) **Verbessertes Verfahren zur Herstellung eines laminierten Schichtverbundes**

(71) Anmelder: Bayer MaterialScience AG, 51368 Leverkusen (DE)
(72) Erfinder: Grötsch, Matthias, 50739 Köln (DE); Tziovaras, Georgios, 42275 Wuppertal (DE)

(57) **Zusammenfassung**

Die vorliegende Erfindung betrifft ein Verfahren zur Herstellung eines laminierten Schichtverbundes, bei welchem wenigstens eine Basisschicht (3) und wenigstens eine weitere Schicht (4), zwischen denen sich ein Bauteil (1) befindet, aus zwei thermoplastischen Materialien mit unterschiedlichen Vicat-Erweichungstemperaturen B/50 zweistufig zu einem Schichtverbund laminiert werden. Die Erfindung betrifft weiterhin einen für dieses Verfahren geeigneten Schichtaufbau, einen nach diesem Verfahren hergestellten laminierten Schichtverbund sowie ein Sicherheits- und/oder Wertdokument enthaltend einen solchen laminierten Schichtverbund.

## Beschreibung

Die vorliegende Erfindung betrifft ein Verfahren zur Herstellung eines laminierten Schichtverbundes, bei welchem wenigstens eine Basisschicht und wenigstens eine weitere Schicht, zwischen denen sich ein Bauteil befindet, aus zwei thermoplastischen Materialien mit unterschiedlichen Vicat-Erweichungstemperaturen B/50 zweistufig zu einem Schichtverbund laminiert werden. Die Erfindung betrifft weiterhin einen für dieses Verfahren geeigneten Schichtaufbau, einen nach diesem Verfahren hergestellten laminierten Schichtverbund sowie ein Sicherheits- und/oder Wertdokument enthaltend einen solchen laminierten Schichtverbund.

ID-Karten stellen Sicherheits- und/oder Wertdokumente von wachsendem Interesse dar. Solche ID-Karten enthaltend in der Regel mehreren Schichten, welche vorzugsweise aus gleichen oder unterschiedlichen thermoplastischen Materialien bestehen können. Solche ID-Karten können zudem in ihrem Aufbau ein Bauteil, vorzugsweise ein elektronisches Bauteil, wie z.B. einen Chip und eine Antenne enthalten. Solche elektronischen Bauteile sind vorzugsweise im mittleren Teil einer ID-Karte angeordnet. Ein solcher mittlerer Teil einer ID-Karte weist in seinem einfachsten Fall wenigstens eine Basisschicht auf, auf die das Bauteil aufgebracht ist, und wenigstens eine vorzugsweise aber mehrere weitere Schicht(en), welche das Bauteil in den oder die thermoplastischen Kunststoffe einbetten sollen (Zwischenschichten), und gegebenenfalls wenigstens eine Deckschicht auf dieser (diesen) weiteren Schicht(en). Diese Schichten werden vorzugsweise mittels Laminieren zu einem untrennbaren Schichtverbund verarbeitet.

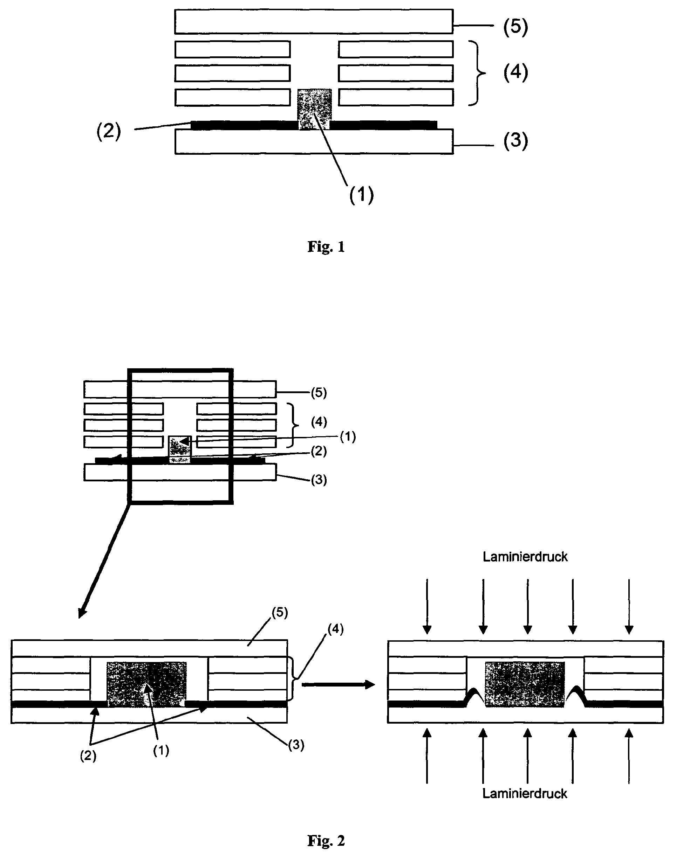

Nach heutigem Stand der Technik gibt es zwei Möglichkeiten, solche Schichtverbunde, beispielsweise für den mitteleren Teil eines Sicherheits- und/oder Wertdokumentes mit eingebautem Bauteil zu laminieren:
1. Die weitere(n) Schicht(en) (Zwischenschicht(en)) wird (werden) ausgestanzt, so dass die Aussparung das einzubettende Bauteil ausspart (vgl. Fig. 1).
2. Die weitere(n) Schicht(en) (Zwischenschicht(en)) wird (werden) nicht ausgestanzt.

Fig. 1 zeigt schematisch einen Schichtaufbau mit einzubettendem Bauteil in Form eines Chips (1) und einer Antenne (2), einer Basisschicht (3), auf die dieses Bauteil aufgebracht ist, drei Zwischenschichten (4), die zusammen ca. die Höhe des Chips aufweisen und rund um den Chip ausgestanzt sind, sowie einer Decksicht (5). Durch das Ausstanzen der Zwischenschichten rund um den Chip entsteht ein kleiner Spalt, in welchen beim Laminierprozeß das erweichte Material gedrückt wird (vgl. Fig. 2). Dies führt zu einer Zerstörung der Verbindung zwischen Antenne und Chip. Zudem ist der zusätzliche Schritt des Ausstanzens der Zwischenschichten nachteilig, da die Größe der Ausgestanzten Fläche jeweils auf das zu integrierende Bauteil abgestimmt werden muss und eine standardisierte großtechnische Produktion erschwert.

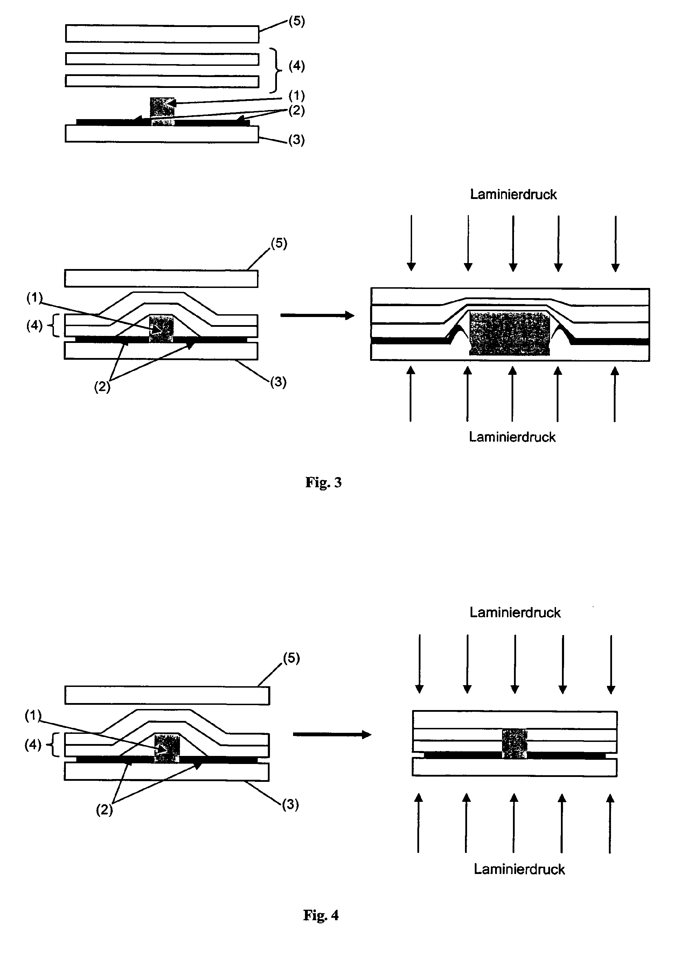

Fig. 3 zeigt schematisch einen Schichtaufbau mit einzubettendem Bauteil in Form eines Chips (1) und einer Antenne (2), einer Basisschicht (3), auf die dieses Bauteil aufgebracht ist, zwei Zwischenschichten (4), die zusammen ca. die Höhe des Chips aufweisen und nicht rund um den Chip ausgestanzt sind, sowie einer Decksicht (5). Durch das Aufliegen der Zwischenschichten auf dem Chip entsteht ebenfalls ein kleiner Spalt, in welchen das erweichte Material beim Laminierprozeß gedrückt wird. Dies führt ebenfalls zu einer Zerstörung der Verbindung zwischen Antenne und Chip.

Beide Möglichkeiten eignen sich daher nicht zur Herstellung von Schichtverbunden mit funktionstüchtigen integrierten Bauteilen.

Es bestand demnach weiterhin Bedarf nach einem Verfahren zur Herstellung eines laminierten Schichtverbundes mit eingebettetem Bauteil, bei welchem die Funktionsfähigkeit des Bauteils durch den Laminierprozess nicht zerstört bzw. erheblich vermindert wird.

Demnach bestand die Aufgabe der vorliegenden Erfindung darin, ein Verfahren zur Herstellung eines laminierten Schichtverbundes mit integriertem Bauteil aufzufinden und bereitzustellen, bei die Funktionsfähigkeit des Bauteils durch den Laminierprozess nicht zerstört bzw. erheblich vermindert wird.

Diese Aufgabe wurde dadurch gelöst, dass ein Schichtaufbau mit wenigstens einer Basisschicht aus einem thermoplastischen, polymeren Material mit einer Vicat-Erweichungstemperatur B/50_{(Basis)} und einem auf diese Basisschicht aufgebrachten Bauteil, wenigstens einer weiteren Schicht aus einem thermoplastischen, polymeren Material, mit einer Vicat-Erweichungstemperatur B/50_{(Schicht)} kleiner der Vicat-Erweichungstemperatur B/50_{(Basis)} und gegebenenfalls wenigstens einer Deckschicht aus einem thermoplastischen, polymeren Material in einem zweistufigen Laminierprozess laminiert wird, wobei der erste Laminierschritt bei einer Temperatur oberhalb der Vicat-Erweichungstemperatur B/50_{(Schicht)}, welche maximal 5°C oberhalb der Vicat-Erweichungstemperatur B/50_{(Basis)} liegt, und der zweite Laminierschritt bei einer Temperatur oberhalb der Vicat-Erweichungstemperatur B/50_{(Basis)} durchgeführt wird.

Gegenstand der vorliegenden Erfindung ist demnach ein Verfahren zur Herstellung eines laminierten Schichtverbundes, bei welchem ein Schichtaufbau enthaltend
- wenigstens eine Basisschicht aus einem thermoplastischen, polymeren Material mit einer Vicat-Erweichungstemperatur B/50_{(Basis)}
- wenigstens eine weitere Schicht aus einem thermoplastischen, polymeren Material, welches eine niedrigere Vicat-Erweichungstemperatur B/50_{(Schicht)} hat als das thermoplastische, polymere Material der Basisschicht
- gegebenenfalls wenigstens eine Deckschicht aus einem thermoplastischen, polymeren Material,
wobei zwischen Basisschicht und der weiteren Schicht aus einem thermoplastischen, polymeren Material mit niedrigerer Vicat-Erweichungstemperatur B/50_{(Schicht)} wenigstens ein Bauteil enthalten ist,
**dadurch gekennzeichnet, dass** der Schichtaufbau
a) in einem ersten Schritt bei einer Temperatur oberhalb der Vicat-Erweichungstemperatur B/50_{(Schicht)}, welche maximal 5°C oberhalb der Vicat-Erweichungstemperatur B/50_{(Basis)} liegt, laminiert wird und
b) in einem zweiten Schritt bei einer Temperatur oberhalb der Vicat-Erweichungstemperatur B/50_{(Basis)} laminiert wird.

Bevorzugt ist die Laminiertemperatur des zweiten Schritts b) des erfmdungsgemäßen Verfahrens höher als die Laminiertemperatur des ersten Schritts a).

Weiterhin bevorzugt wird im ersten Schritt a) des erfindungsgemäßen Verfahrens bei einer Temperatur oberhalb der Vicat-Erweichungstemperatur B/50_{(Schicht)} und unterhalb der Vicat-Erweichungstemperatur B/50_{(Basis)} laminiert.

Das erfindungsgemäße Verfahren bietet den Vorteil, dass durch Einsatz eines termoplastischen Kunststoffes mit niedrigerer Vicat-Erweichungstemperatur B/50 für die weitere(n) Schicht(en), im ersten Laminierschritt nur diese weitere(n) Schicht(en) erweicht werden und sich lückenlos um das einzubettende Bauteil legen, bevor im zweiten Schritt die Basisschicht zur Ausbildung des gesamten Schichtverbundes erweicht wird. Dadurch kann keine Zerstörung der Funktionsfähigkeit des Bauteils gemäß Verfahren des Standes der Technik erfolgen.

Bei der Vicat-Erweichungstemperatur B/50 eines thermoplastischen Kunststoffs handelt es sich im Rahmen der Erfindung um die Vicat-Erweichungstemperatur B/50 nach ISO 306 (50 N; 50 °C/h).

Bevorzugt ist die Vicat-Erweichungstemperatur B/50_{(Schicht)} mindestens 5°C niedriger, bevorzugt mindestens 10°C niedriger als die Vicat-Erweichungstemperatur B/50_{(Basis)}.

Bei dem Bauteil kann es sich beispielsweise und bevorzugt um wenigstens ein elektronisches Bauteil oder wenigstens ein (Volumen-)Hologramm handeln. Bei dem oder den elektronischen Bauteil(en) kann es sich beispielsweise um integrierte Schaltungen, Dickschicht-Schaltungen, Schaltungen umfassend mehrere diskrete aktive und passive elektronische Bauteile, Sensoren, Chipmodule, Displays, Batterien, Spulen, Kondensatoren, Leiterbahnen und/oder Kontaktstellen handeln.

Bei dem thermoplastischen polymeren Material sowohl für die Basisschicht als auch für die weitere(n) Schicht(en) kann es sich unabhängig voneinander bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, handeln. Für bestimmte Anwendungen kann es vorteilhaft und demnach bevorzugt sein, einen transparenten thermoplastischen Kunststoff einzusetzen. Der thermoplastische Kunststoff der Schicht(en) enthaltend wenigstens einen thermoplastischen Kunststoff sowie der Schicht(en) enthaltend wenigstens einen thermoplastischen Kunststoff und wenigstens ein lasersensibles Additiv kann gleich oder unterschiedlich sein.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS^{®}, Hoechst), Polyvinylchlorid, Poly- oder Copolykondensate der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), Poly- oder Copolykondensate der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU) oder Mischungen aus den vorangehend genannten.

Bevorzugte thermoplastische Kunststoffe sind Polyurethane, Polycarbonate oder Copolycarbonate oder Blends enthaltend wenigstens ein Polyurethan, Polycarbonat oder Copolycarbonat. Besonders bevorzugt sind Polycarbonate oder Copolycarbonate Blends enthaltend wenigstens ein Polycarbonat oder Copolycarbonat. Bevorzugte Blends sind solche enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten M_{w} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{w} von 10.000 bis 200.000, bevorzugt von 26.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestem oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit. Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausfühnmgsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate oder Copolycarbonate kann unter anderem in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Beispielsweise kann Herstellung der Polycarbonate oder Copolycarbonate in bekannter Weise nach dem Phasengrenzflächenverfahren erfolgen.

Gemäß diesem Verfahren erfolgt die Phosgenierung eines in wässrig-alkalischer Lösung (oder Suspension) vorgelegten Dinatriumsalzes eines Diphenols (oder eines Gemisches verschiedener Diphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Die Herstellung der Polycarbonate oder Copolycarbonate kann jedoch auch in bekannter Weise nach dem Schmelzeumesterungsverfahren erfolgen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren alkylierte, kernalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'-Bis-(4-hydroxyphenyl)-3-diisopropyl-benzol, 1,1'-Bis-(4-hydroxyphenyl)-4-düsopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder

Dihydroxydiphenylcycloalkane der Formel (Ia) 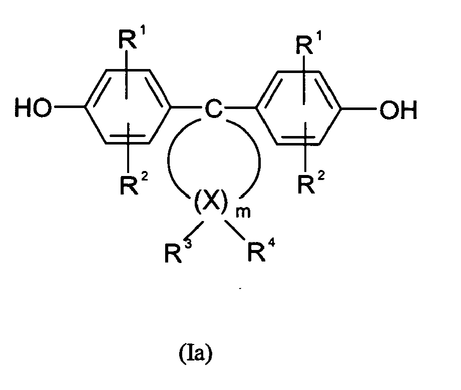 worin
- R¹ und R²: unabhängig voneinander Wasserstoff, Halogen, bevorzugt Chlor oder Brom, C₁- C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆- Alkyl und
- X: Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ib) bis (Id),

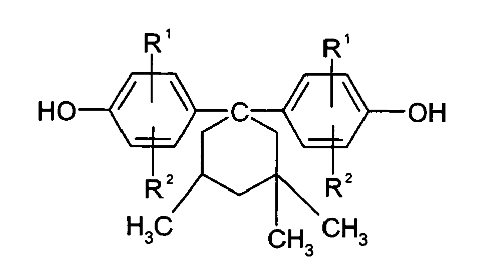

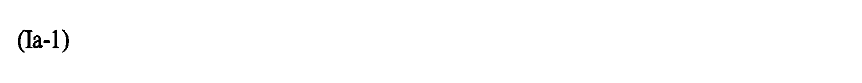

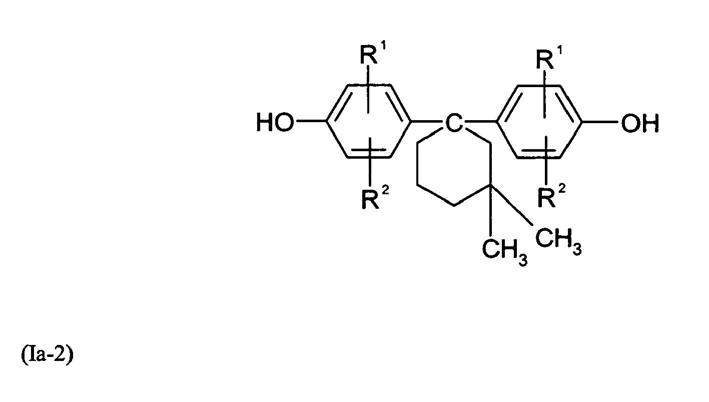

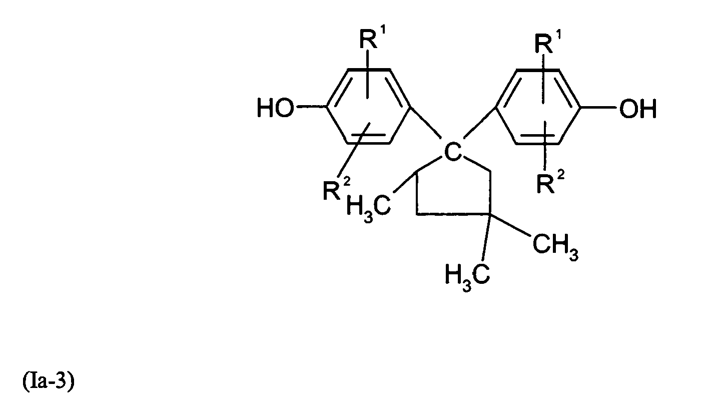

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate für die Herstellung nach dem Schmelzeumesterungsverfahren können beispielsweise Diarylcarbonate der allgemeinen Formel (II) sein, 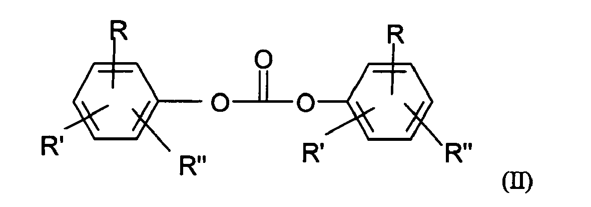 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R"' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenylphenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 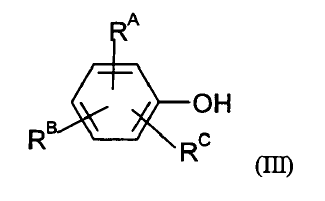 wobei
- R^{A}: für lineares oder verzweigtes C₁-C₃₄-Alkyl, C₁-C₃₄-Alkoxy, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Für die Polycarbonate oder Copolycarbonate für die weitere(n) Schicht(en) mit einer niedrigeren Vicat-Erweichungstemperatur B/50_{(Schicht)} eignen sich besonders bevorzugt Monohydroxyarylverbindung(en) der allgemeinen Formel (III), worin R^{A} für lineares oder verzweigtes C₁₀-C₂₅-Alkyl, C₁₀-C₂₅-Alkoxy oder C₁₀-C₂₅-Alkyl-substituiertes Aryl und R^{B} und R^{C} unabhängig voneinander gleich oder verschieden für Wasserstoff, lineares oder verzweigtes für lineares oder verzweigtes C₁₀-C₂₅-Alkyl, C₁₀-C₂₅-Alkoxy oder C₁₀-C₂₅-Alkyl-substituiertes Aryl stehen. Dabei steht "C₁₀-C₂₅-Alkyl-substituiertes Aryl" bevorzugt für einen Phenyl- oder Naphtylrest, der mit C₁₀-C₂₅-Alkyl substituiert ist.

Solche Monohydroxyarylverbindungen sind beispielsweise n-Decyl-, n-Undecyl-, n-Dodecyl-, n-Tridecyl-, n-Pentadecyl-, n-Hexadecyl-, n-Heptadecyl- oder n-Octadecylphenol. Dabei können die Phenole diese Substituenten in o-, m-, oder p-Stellung tragen.

Ganz besonders bevorzugt sind n-Dodecylphenol und 3-Pentadecylphenol.

Besonders bevorzugt können geeignete Polycarbonate oder Copolycarbonate für die weitere(n) Schicht(en) mit einer niedrigeren Vicat-Erweichungstemperatur B/50_{(Schicht)} zu mehr als 80 mol-%, insbesondere zu mehr als 90 mol-%, bezogen auf die eingesetzte Gesamtmenge an Kettenabbrecher, Endgruppen der allgemeinen Formel (III), worin R^{A} für lineares oder verzweigtes C₁₀-C₂₅-Alkyl, C₁₀-C₂₅-Alkoxy oder C₁₀-C₂₅-Alkyl-substituiertes Aryl und R^{B} und R^{C} unabhängig voneinander gleich oder verschieden für Wasserstoff, lineares oder verzweigtes für lineares oder verzweigtes C₁₀-C₂₅-Alkyl, C₁₀-C₂₅-Alkoxy oder C₁₀-C₂₅-Alkyl-substituiertes Aryl stehen, enthalten. In geeigneten Polycarbonaten oder Copolycarbonaten für die weitere(n) Schicht(en) mit einer niedrigeren Vicat-Erweichungstemperatur B/50_{(Schicht)} können aber auch bis zu 40 mol-%, bezogen auf die eingesetzte Gesamtmenge an Kettenabbrecher, der Endgruppen aus anderen Kettenabbrechern der allgemeinen Formel (III) gebildet werden.

Die Messung des jeweiligen Anteils an Endgruppen lässt sich z.B. mittels NMR-Spektroskopie über Integration der aliphatischen Protonen bestimmen. Eine genauere Analyse besteht in der alkalischen Totalverseifung des Polycarbonats oder Copolycarbonats und einer anschließenden HPLC-Analyse, wobei zuvor eine entsprechende Kalibrierung mit der Reinsubstanz, z.B. 4-n-Pentadecylphenol, vorgenommen wird.

Die Kettenabbrecher der allgemeinen Formel (III) werden bei der Herstellung der Polycarbonate oder Copolycarbonate bevorzugt in einer Gesamtmenge von 0,1 bis 10 mol-%, bezogen auf Mole Diphenole eingesetzt.

Geeignete Verzweiger können Verbindungen mit drei und mehr funktionellen Gruppen, vorzugsweise solche mit drei oder mehr Hydroxylgruppen. Üblicherweise werden Trisphenole, Quarterphenole oder Säurechloride von Tri- oder Tetracarbonsäuren verwendet, oder auch Gemische der Polyphenole oder der Säurechloride.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl)-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die thermoplastischen polymeren Materialien können mit verschiedenen Additiven versetzt sein.

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Beispielsweise können lasersensible Additive zur Beschreibbarkeit mittels Lasergravur zugesetzt werden. Als solche lasersensiblen Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs^{®} kommerziell angeboten. Weiterhin als lasersensible Additive geeignete Absorber sind Ruß, beschichtete Schichtsilikate wie z.B. in DE-A-195 22 397 beschrieben und unter den Markennamen Lazerflair^{®} kommerziell erhältlich, antimondotiertes Zinnoxid wie z.B. in US 6,693,657 beschrieben und unter den Markennamen Mark-it^{™} kommerziell erhältlich sowie phosphorhaltige Zinn-Kupfer-Mischoxide wie z.B. in WO-A 2006/042714 beschrieben.

Bevorzugt sind lasersensible Additive für zur Lasergravurbeschriftung von dunkel auf hellem Untergrund. Besonders bevorzugte lasersensible Additive im Rahmen der Erfindung sind Schwarzpigmente. Ein ganz besonders bevorzugtes lasersensibles Additiv ist Ruß.

Alternativ oder zusätzlich dazu können den thermoplastischen polymeren Materialien beispielsweise Füllstoffe zugesetzt werden. Bei dem Füllstoff kann es sich beispielsweise und bevorzugt um wenigstens ein Farbpigment und/oder wenigstens einen sonstigen Füllstoff zur Erzeugung einer Transluzenz der gefüllten Schichten, wie z.B. z.B. konventionelle anorganische Pigmente, insbesondere Metalle oder Metalloxide wie Aluminiumoxide, Kieselsäure, Titanite, sowie alkalische Metallsalze wie Carbonate oder Sulfate von Calcium oder Barium, besonders bevorzugt um ein Weißpigment, ganz besonders bevorzugt um Titandioxid, Zirkoniumdioxid oder Bariumsulfat, in einer bevorzugten Ausführungsform um Titandioxid handeln.

Die genannten Füllstoffe werden vorzugsweise in Mengen von 2 bis 45 Gew.-%, besonders bevorzugt von 5 bis 30 Gew.-%, bezogen auf das Gesamtgewicht Füllstoff und thermoplastischem Kunststoff, den thermoplastischen Kunststoffen vor der Formgebung zur Kunststoff-Folie, welche zum Beispiel durch Extrusion oder Coextrusion erfolgen kann, zugegeben.

Auch weitere bekannte Additive, wie z.B. Antistatika, IR-Absorber, Metallkennzeichnungsplättchen, mit Fluoreszenzfarbstoffen markierte Glasfasern, etc., können den thermoplastischen polymeren Materialien zugesetzt werden.

Bevorzugt weist der Schichtaufbau für das erfindungsgemäße Verfahren wenigstens eine Deckschicht und das thermoplastische, polymere Material der Deckschicht eine Vicat-Erweichungstemperatur B/50_{(Decksehicht)} auf, welche höher ist als die Vicat-Erweichungstemperatur B/50_{(Schicht)}.

Auch für die Deckschicht(en) kommen die vorangehend aufgeführten thermoplastischen, polymeren Materialien in Frage.

Bevorzugt ist die Vicat-Erweichungstemperatur B/50_{(Decksehicht)} mindestens 5°C höher, bevorzugt mindestens 10°C höher als die Vicat-Erweichungstemperatur B/50_{(Schicht)}.

Für das erfindungsgemäße Verfahren wird der zu laminierende Schichtaufbau derart hergestellt, dass aus Folien aus den jeweiligen thermoplastischen, polymeren Materialien mit den jeweiligen Vicat-Erweichungstemperaturen B/50 ein entsprechender Folienstapel gebildet und dieser anschließend erfindungsgemäß zweistufig laminiert wird. Dabei wird das einzubettende Bauteil vor Bildung des Folienstapels auf die Folie zur Herstellung der Basisschicht aufgebracht.

Das Bauteil kann vor Bildung des Folienstapels auf der Folie zur Herstellung der Basisschicht mittels bekannter Maßnahmen, wie z.B. Laminieren, Schweißen, Klemmen, Einpressen, Kleben und/oder Drucken befestigt werden, um ein Verändern der Lage während des Laminiervorganges zu vermeiden. Das Bauteil kann aber auch lediglich befestigungslos auf die Basisschicht aufgelegt werden.

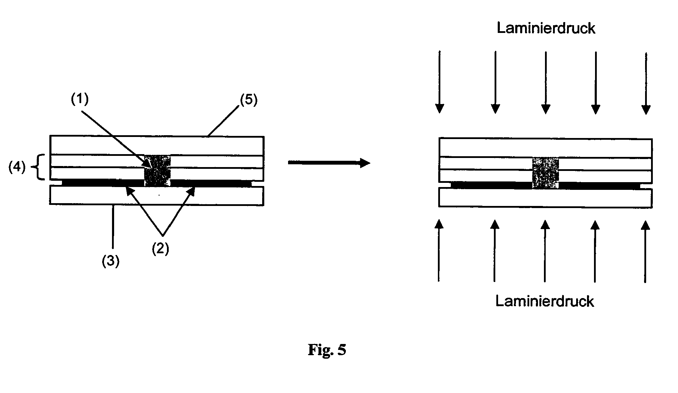

In bevorzugten Ausführungsformen des erfindungsgemäßen Verfahrens wird der Schichtaufbau im ersten Laminierschritt mit einer Temperatur, die 5 bis 30°C, bevorzugt 5 bis 15°C oberhalb der Vicat-Erweichungstemperatur B/50_{(Schicht)} liegt und maximal 5°C oberhalb, bevorzugt jedoch unterhalb der Vicat-Erweichungstemperatur B/50_{(Basis)} liegt, beaufschlagt, durch welche die weitere(n) Schicht(en) enthaltend wenigstens ein Polycarbonat oder Copolacarbonat mit einer niedrigeren Vicat-Erweichungstemperatur B/50_{(Schicht)} erweicht (erweichen). Da Basis- und Deckschicht(en) bei dieser Temperatur noch nicht bzw. noch nicht vollständig erweichen, kommt es zu einer schonenden Umfließung des Kerns ohne Spaltbildung (vgl. shematische Darstellung in Fig.4). Anschließend wird der Schichtaufbau bei einer Temperatur, die oberhalb, bevorzugt 5 bis 50°C, besonders bevorzugt 10 bis 40°C, ganz besonders bevorzugt 20 bis 35 °C oberhalb der Vicat-Erweichungstemperatur B/50_{(Basis}) liegt, laminiert (vgl, schematische Darstellung in Fig. 5). Der Laminierdruck beträgt im ersten Laminierschritt zur schonenden Umfließung vorzugsweise 2 bis 100 N/cm², im zweiten Laminierschritt beim Aufheizen und Abkühlen vorzugsweise 100 bis 400 N/cm². Besonders bevorzug ist im ersten Laminierschritt zur schonenden Umfließung ein Druck von 10 bis 30 N/cm² und im zweiten Laminierschritt beim Aufheizen und Abkühlen ein Druck von 150 bis 350 N/cm². Die Laminierzeit kann je nach Anzahl zu laminierender Folien im Folienstapel vorzugsweise zwischen wenigen Minuten und mehr als einer Stunde liegen. Bevorzugt ist je nach Anzahl zu laminierender Folien im Folienstapel eine Laminierzeit von 1 bis 30 Minuten.

Fig. 4 zeigt schematisch einen Folienstapel mit einer Basisschicht (3), einem einzubettendem Bauteil in Form eines Chips (1) und einer Antenne (2), zwei Zwischenschichten (4), die zusammen ca. die Höhe des Chips (1) aufweisen und einer Deckschicht (5), welcher im ersten Schritt des erfindungsgemäßen Verfahrens mit Druckbeaufschlagung bei einer Temperatur T oberhalb der Vicat-Erweichungstemperatur B/50_{(Schicht)} und maximal 5°C oberhalb, bevorzugt jedoch unterhalb der Vicat-Erweichungstemperatur B/50_{(Basis)} laminiert wird.

Fig. 5 zeigt schematisch den gemäß Fig. 4 laminierten Folienstapel, welcher im zweiten Schritt des erfindungsgemäßen Verfahrens mit Druckbeaufschlagung bei einer Temperatur T oberhalb der Vicat-Erweichungstemperatur B/50_{(Basis)} laminiert wird.

Weiterhin Gegenstand der vorliegenden Erfindung ist ein Schichtaufbau enthaltend
- wenigstens eine Basisschicht aus einem thermoplastischen, polymeren Material mit einer Vicat-Erweichungstemperatur B/50_{(Basis)}
- wenigstens eine weitere Schicht aus einem thermoplastischen, polymeren Material, welches eine niedrigere Vicat-Erweichungstemperatur B/50_{(Schicht)} hat als das thermoplastische, polymere Material der Basisschicht
- gegebenenfalls wenigstens eine Deckschicht aus einem thermoplastischen, polymeren Material,
wobei zwischen Basisschicht und der weiteren Schicht aus einem thermoplastischen, polymeren Material mit niedrigerer Vicat-Erweichungstemperatur B/50_{(Schicht)} wenigstens ein Bauteil enthalten ist.

Bei dem Schichtaufbau handelt es sich bevorzugt um einen Folienstapel entsprechender Folien und dem elektronischen Bauteil zwischen der Folie zur Herstellung der Basisschicht und der - gegebenenfalls ersten - weiteren Schicht, wobei das Bauteil auf der Basisschicht befestigt sein kann oder nicht.

Die jeweiligen Folien können aus den vorangehend genannten thermoplastischen, polymeren Materialien mittels Extrusion oder Coextrusion hergestellt werden. Diese Verfahren sind dem Fachmann bekannt und in der Literatur hinlänglich beschrieben.

Die Dicke der geeigneten Folien beträgt bevorzugt 5 bis 1000, µm, besonders bevorzugt 5 bis 850.

Die Folien können einseitig oder beidseitig glatt oder einseitig oder beidseitig mattiert oder strukturiert sein.

Es können auch mehrere Schichten des erfindungsgemäßen Schichtaufbaus in Form einer Coextrusionsfolie in den Folienstapel eingebracht werden.

Mit dem erfindungsgemäßen Verfahren können aus dem erfindungsgemäßen Schichtaufbau laminierte Schichtverbunde enthaltend funktionsfähige Bauteile hergestellt werden.

Weiterhin Gegenstand der vorliegenden Erfindung ist daher ein laminierter Schichtverbund erhältlich nach dem erfindungsgemäßen Verfahren.

Die Schichten im erfindungsgemäßen Schichtverbund oder Schichtaufbau können aus gleichen oder verschiedenen Materialien bestehen. Auch wenn Schichten überwiegend aus dem gleichen thermoplastischen, polymeren Material bestehen, so sind diese im Sinne der vorliegenden Erfindung dennoch unterschiedliche Schichten, wenn sie in z.B. in getrennten Arbeitsschritten aufgebracht werden, unterschiedliche Zusätze enthalten oder unterschiedliche Eigenschaften aufweisen.

Der Ausdruck "mindestens eine Schicht" bedeutet, dass der erfindungsgemäße Schichtverbund oder Schichtaufbau eine oder mehrere solcher Schichten aufweisen kann.

Der erfindungsgemäße laminierte Schichtverbund kann Bestandteil von Sicherheits- und/oder Wertdokumenten sein.

Weiterhin Gegenstand der vorliegenden Erfindung ist daher ein Sicherheits- und/oder Wertdokument enthaltend wenigstens einen erfindungsgemäßen laminierten Schichtverbund.

Bei dem Sicherheits- und/oder Wertdokument kann es sich beispielsweise um Datenträger in Form von Karten und Ausweisen, wie z.B. Smart-ID-Karten, Chipkarten allgemein, EC-Karten, Kreditkarten, Versichertenkarten, Pässe, RFID-Tags, Führerscheine etc handeln.

Das erfindungsgemäße Sicherheits- und/oder Wertdokument kann zudem weitere zusätzliche Schichten aufweisen, die dem UV-Schutz, dem Schutz vor mechanischer Beschädigung - wie z.B. Kratzfestbeschichtungen - etc. aufweisen. Solche Schichten können gegebenenfalls auch nachträglich auf den erfindungsgemäßen laminierten Schichtverbund aufgebracht werden. Dies kann beispielsweise mittels Kleben oder eines weiteren Laminierschrittes erfolgen.

Die Erfindung wird im Folgenden anhand von Beispielen veranschaulicht. Diese Beispiele dienen der exemplarischen Veranschaulichung der Erfindung und sind in keiner Weise als Beschränkung aufzufassen.

### Beispiele

### Beispiel 1: Herstellung eines Polycarbonatgranulat zur Herstellung der weiteren Schicht(en) mit niedriger Vicat-Erweichungstemperatur B/50_{(Schicht)}

Zu einer mit Stickstoff inertisierten Lösung von 4566 g (20 mol) Bisphenol A und 3520 g (88 mol) Natriumhydroxid in 40 1 Wasser wurden 40 1 Methylenchlorid hinzugegeben. Bei einem pH-Wert von 12.5 - 13.5 und 20 °C wurden 3556 g (40 mol) Phosgen eingeleitet. Um den pH-Wert nicht unter 12,5 fallen zu lassen, wurde während der Phosgenierung 30 %-ige Natronlauge zugegeben (ca. 7000 g). Nach beendeter Phosgenierung und Spülung mit Stickstoff wurde 258 g (0.85 mol) m-Pentadecylphenol gelöst in 1 1 Dichlormethan hinzugegeben. Es wurde für weitere 10 Minuten gerührt, 22.6 g (0.2 mol) N-Ethylpiperidin zugegeben und 1 Stunde nachrühren gelassen. Die organische Phase wurde nach Abtrennen der wässrigen Phase mit Phosphorsäure angesäuert und mit destilliertem Wasser neutral und salzfrei gewaschen. Nach Lösungsmittelaustausch gegen Chlorbenzol wurde das Produkt bei 290 °C und 80 Umdrehungen/min bei 0.1 mbar über einen Ausdampfextruder extrudiert und über einen Granulator granuliert.

### Beispiel 2: Compoundierung eines Masterbatches für die Herstellung der Basisschicht enthaltend einen thermoplastischen Kunststoff und ein Weißpigment als Füllstoff

Die Herstellung Masterbatches für die Herstellung der Schicht enthaltend einen thermoplastischen Kunststoff und ein Weißpigment als Füllstoff erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- Polycarbonat Makrolon^{®} 3108 der Fa. Bayer MaterialScience AG mit einem Anteil von 85 Gew.-%
- Titandioxid (Kronos® 2230 der Fa. Kronos Titan) als Weißpigment-Füllstoff mit einem Anteil von 15 Gew.-%.

### Beispiel 3: Herstellung der entsprechenden Folien

Es wurden jeweils Folien aus dem Granulat gemäß Beispiel 1, dem Masterbatch gemäß Beispiel 2 und reinem Polycarbonat Makrolon^{®} 3108 der Fa. Bayer MaterialScience AG extrudiert. Die jeweiligen Polycarbonat-Folien hatten eine Breite von 350 mm.

Hierzu wurde eine Anlage aus
- einem Extruder der Firma Stork mit einer Schnecke von 37 mm Durchmesser (D) und einer Länge von 24xD. Die Schnecke weist eine Entgasungszone auf;
- einer Breitschlitzdüse mit 350 mm Breite;
- einem Lippenspalt von 0,8 mm
- einer Abzugseinrichtung;
- einer Aufwickelstation
verwendet.

Von der Düse gelangte die Schmelze auf die Gießwalze und anschließend auf die Kühlwalze, wobei die Walzen die in der Tab. 1 genannte Temperatur aufwiesen. Anschließend wurde die Folie durch einen Abzug transportiert und danach aufgewickelt.

**Tab. 1**

| Verfahrensparameter | |
|---|---|
| Temperatur Zylinder 1 | 230 °C |
| Temperatur Zylinder 2 | 235 °C |
| Temperatur Zylinder 3 | 240 °C |
| Temperatur Entgasung | 240 °C |
| Temperatur Düse 1 | 240°C |
| Temperatur Düse 2 | 240°C |
| Temperatur Düse 3 | 240°C |
| Drehzahl Extruder | 30 min⁻¹ |
| Temperatur Gießwalze | 100 °C |
| Temperatur Kühlwalze | 100 °C |
| Stromaufnahme Extruder | 16,5 A |
| Massedruck | 80 bar |

Aus dem Granulat gemäß Beispiel 1 wurden Folien der Dicke von 100 µm hergestellt.

Aus dem Masterbatch gemäß Beispiel 2 wurden Folien der Dicke von 105 µm und 150 µm hergestellt.

Aus Makrolon^{®} 3108 wurden Folien der Dicke von 100 µm hergestellt.

### Bespiel 4: Herstellung eines laminierten Schichtverbundes nach dem erfindungsgemäßen Verfahren

Es wurde ein Folienstapel bestehend aus
- einer 150 µm dicken Folie aus dem Masterbatch gemäß Beispiel 2 für eine erste Basisschicht (Vicat-Erweichungstemperatur B/50_{(Basis)} = 148,1 °C),
- einer 105 µm dicken Folie aus dem Masterbatch gemäß Beispiel 2 für eine zweite Basisschicht (Vicat-Erweichungstemperatur B/50_{(Basis)} = 148,1 °C),
- einem Bauteil im Form von Antenne und Chip auf dieser Folie für die zweite Basisschicht,
- zwei 100 µm dicken Folien aus dem Granulat gemäß Beispiel 1 für zwei weitere Schichten (Vicat-Erweichungstemperatur B/50_{(Schicht)} = 133,1 °C),
- einer 105 µm dicken Folie aus dem Masterbatch gemäß Beispiel 2 für eine Deckschicht (Vicat-Erweichungstemperatur B/50_{(Deckschicht)} = 148,1 °C)
hergestellt.

Die weiteren Schichten wurden mit transparentem Material, die Basis- und Deckschichten mit weißem Material realisiert, um in Mikroskopieaufnahmen den Materialfluss erkennen zu können.

Der Folienstapel wurde dann in einem ersten Laminierschritt bei einer Temperatur von 140°C und einem Druck von 15 N/cm² für 10 Minuten in der Presse laminiert. Anschließend wurde die Presse auf eine Temperatur von 180°C aufgeheizt und der vorlaminierte Schichtaufbau in einem zweiten Schritt für 2 Minuten einem Druck von 300 N/cm² ausgesetzt. Anschließend wurde der laminierte Schichtverbund bei einem Druck von 300 N/cm² bis auf eine Temperatur von 40°C abgekühlt und abschließend aus der Presse genommen.

Die Verbindung zwischen Antenne und Chip war auch nach dem Laminierprozess noch funktionstüchtig.

### Vergleichsbeispiel 5: Herstellung eines laminierten Schichtverbundes

Es wurde ein Folienstapel bestehend aus
- einer 150 µm dicken Folie aus dem Masterbatch gemäß Beispiel 2 für eine erste Basisschicht (Vicat-Erweichungstemperatur B/50_{(Basis)} = 148,1 °C),
- einer 105 µm dicken Folie aus dem Masterbatch gemäß Beispiel 2 für eine zweite Basisschicht (Vicat-Erweichungstemperatur B/50_{(Basis)} = 148,1 °C),
- einem Bauteil im Form von Antenne und Chip auf dieser Folie für die zweite Basisschicht,
- zwei 100 µm dicken Folien aus Makrolon^{®} 3108 für zwei weitere Schichten (Vicat-Erweichungstemperatur B/50_{(Schicht)} = 149,0 °C), wobei aus diesen Folien jeweils Aussparungen in der ungefähren Größe des einzubettenden Chips ausgestanzt waren,
- einer 105 µm dicken Folie aus dem Masterbatch gemäß Beispiel 2 für eine Deckschicht (Vicat-Erweichungstemperatur B/50_{(Deckschicht)} = 148,1 °C)
hergestellt.

Die weiteren Schichten wurden mit transparentem Material, die Basis- und Deckschichten mit weißem Material realisiert, um in Mikroskopieaufnahmen den Materialfluss erkennen zu können.

Der Folienstapel wurde dann in einem ersten Laminierschritt bei einer Temperatur von 140°C und einem Druck von 15 N/cm² für 10 Minuten in der Presse laminiert. Anschließend wurde die Presse auf eine Temperatur von 180°C aufgeheizt und der vorlaminierte Schichtaufbau in einem zweiten Schritt für 2 Minuten einem Druck von 300 N/cm² ausgesetzt. Anschließend wurde der laminierte Schichtverbund bei einem Druck von 300 N/cm² bis auf eine Temperatur von 40°C abgekühlt und abschließend aus der Presse genommen.

Basis- und Deckschicht wurden während des Laminierprozesses in den Stanzspalt gedrückt. Die Antenne wurde stark gedehnt und die Verbindung zwischen Antenne und Chip war gerissen und nicht mehr funktionstüchtig.

Die Beispiele zeigen, dass mit dem erfindungsgemäßen Verfahren das Bauteil in Form von Chip und Antenne während des Laminieiprozesses nicht zerstört wurde und anschließend noch funktionsfähig war.

## Patentansprüche

1. Verfahren zur Herstellung eines laminierten Schichtverbundes, bei welchem ein Schichtaufbau enthaltend
- wenigstens eine Basisschicht aus einem thermoplastischen, polymeren Material mit einer Vicat-Erweichungstemperatur B/50_{(Basis)}
- wenigstens eine weitere Schicht aus einem thermoplastischen, polymeren Material, welches eine niedrigere Vicat-Erweichungstemperatur B/50_{(Schicht)} hat als das thermoplastische, polymere Material der Basisschicht
- gegebenenfalls wenigstens eine Deckschicht aus einem thermoplastischen, polymeren Material,
wobei zwischen Basisschicht und der weiteren Schicht aus einem thermoplastischen, polymeren Material mit niedrigerer Vicat-Erweichungstemperatur B/50_{(Schicht)} wenigstens ein Bauteil enthalten ist,
**dadurch gekennzeichnet, dass** der Schichtaufbau
a) in einem ersten Schritt bei einer Temperatur oberhalb der Vicat-Erweichungstemperatur B/50_{(Schicht)}, welche maximal 5°C oberhalb der Vicat-Erweichungstemperatur B/50_{(Basis)} liegt, laminiert wird und
b) in einem zweiten Schritt bei einer Temperatur oberhalb der Vicat-Erweichungstemperatur B/50_{(Basis)} laminiert wird.

2. Verfahren gemäß Anspruch 1, **dadurch gekennzeichnet, dass** im ersten Schritt a) bei einer Temperatur oberhalb der Vicat-Erweichungstemperatur B/50_{(Schicht)} und unterhalb der Vicat-Erweichungstemperatur B/50_{(Basis)} laminiert wird.

3. Verfahren gemäß Anspruch 1 oder 2, **dadurch gekennzeichnet, dass** die Vicat-Erweichungstemperatur B/50_{(Schicht)} mindestens 5°C niedriger, bevorzugt mindestens 10°C niedriger als die Vicat-Erweichungstemperatur B/50_{(Basis)} ist.

4. Verfahren gemäß wenigstens einem der Ansprüche 1 bis 3, **dadurch gekennzeichnet, dass** es sich bei dem thermoplastischen, polymeren Material der Basisschicht um wenigstens einen thermoplastischen Kunststoff ausgewählt aus Polymerisaten von ethylenisch ungesättigten Monomeren und/oder Polykondensaten von bifunktionellen reaktiven Verbindungen oder Mischungen aus diesen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Polyvinylchlorid, Poly- oder Copolykondensat(e) der Terephthalsäure, Poly- oder Copolykondensat(e) der Naphthalindicarbonsäure, Poly- oder Copolykondensat(e) wenigstens einer Cycloalkyldicarbonsäure, Polysulfone oder Mischungen aus diesen, besonders bevorzugt um Polycarbonat, Polyurethan oder Mischungen enthaltend wenigstens einen dieser thermoplastischen Kunststoffe, ganz besonders bevorzugt Polycarbonat oder Mischungen enthaltend Polycarbonat handelt.

5. Verfahren gemäß wenigstens einem der Ansprüche 1 bis 4, **dadurch gekennzeichnet, dass** es sich bei dem thermoplastischen, polymeren Material der weiteren Schicht um wenigstens einen thermoplastischen Kunststoff ausgewählt aus Polymerisaten von ethylenisch ungesättigten Monomeren und/oder Polykondensaten von bifunktionellen reaktiven Verbindungen oder Mischungen aus diesen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Polyvinylchlorid, Poly- oder Copolykondensat(e) der Terephthalsäure, Poly- oder Copolykondensat(e) der Naphthalindicarbonsäure, Poly- oder Copolykondensat(e) wenigstens einer Cycloalkyldicarbonsäure, Polysulfone oder Mischungen aus diesen, besonders bevorzugt um Polycarbonat, Polyurethan oder Mischungen enthaltend wenigstens einen dieser thermoplastischen Kunststoffe, ganz besonders bevorzugt Polycarbonat oder Mischungen enthaltend Polycarbonat handelt.

6. Verfahren gemäß wenigstens einem der Ansprüche 1 bis 5, **dadurch gekennzeichnet, dass** es sich bei dem Bauteil um wenigstens ein elektronisches Bauteil oder ein (Volumen)Hologramm handelt.

7. Verfahren gemäß Anspruch 6, **dadurch gekennzeichnet, dass** es sich bei dem oder den elektronischen Bauteil(en) um integrierte Schaltungen, Dickschicht-Schaltungen, Schaltungen umfassend mehrere diskrete aktive und passive elektronische Bauteile, Sensoren, Chipmodule, Displays, Batterien, Spulen, Kondensatoren, Leiterbahnen und/oder Kontaktstellen handelt.

8. Verfahren gemäß wenigstens einem der Ansprüche 1 bis 7, **dadurch gekennzeichnet, dass** der Schichtaufbau wenigstens eine Deckschicht aufweist und das thermoplastische Material der Deckschicht eine Vicat-Erweichungstemperatur B/50_{(Deckschicht)} aufweist, welche höher ist als die Vicat-Erweichungstemperatur B/50_{(Schicht)}.

9. Schichtaufbau enthaltend
- wenigstens eine Basisschicht aus einem thermoplastischen, polymeren Material mit einer Vicat-Erweichungstemperatur B/50_{(Basis)}
- wenigstens eine weitere Schicht aus einem thermoplastischen, polymeren Material, welches eine niedrigere Vicat-Erweichungstemperatur B/50_{(Schicht)} hat als das thermoplastische, polymere Material der Basisschicht
- gegebenenfalls wenigstens eine Deckschicht aus einem thermoplastischen, polymeren Material,
wobei zwischen Basisschicht und der weiteren Schicht aus einem thermoplastischen, polymeren Material mit niedrigerer Vicat-Erweichungstemperatur B/50_{(Schicht)} wenigstens ein Bauteil enthalten ist.

10. Laminierter Schichtverbund erhältlich nach einem Verfahren gemäß wenigstens einem der Ansprüche 1 bis 8.

11. Sicherheits- und/oder Wertdokument enthaltend wenigstens einen laminierten Schichtverbund gemäß Anspruch 10.
